# EUROPEAN PATENT SPECIFICATION

(11) **EP 3 971 440 B1**
(45) Date of publication and mention of the grant of the patent: **27.12.2023**
(21) Application number: 21197808.5
(22) Date of filing: 20.09.2021
(51) Int. Cl.: F16D 65/12, F16D 66/02

(54) **BRAKING BAND OF A DISC BRAKE DISC AND DISC BRAKE DISC**
BREMSBAND EINER SCHEIBENBREMSSCHEIBE SOWIE SCHEIBENBREMSSCHEIBE
BANDE DE FREINAGE D'UN DISQUE DE FREIN À DISQUE ET DISQUE DE FREIN À DISQUE

(30) Priority: 21.09.2020 IT 202000022216
(43) Date of publication of application: 23.03.2022
(73) Proprietor: Brembo S.p.A., 24035 Curno (Bergamo) (IT)
(72) Inventor: CARMINATI, Fabiano, 24035 Curno, Bergamo (IT); GIAMMARINARO, Salvatore, 24035 Curno, Bergamo (IT); TOMBOLAN, Mattia, 24035 Curno, Bergamo (IT)
(74) Representative: Zanettin, Gianluigi

(56) References cited:
- EP-A2- 2 921 322
- US-A1- 2002 117 360
- US-A1- 2013 161 132
- US-A1- 2015 267 768
- US-A1- 2017 122 392
- US-A1- 2019 011 004
- US-B1- 6 279 698

## Description

### FIELD OF APPLICATION

The present invention relates to a braking band of a disc brake disc and to a disc brake disc comprising a braking band and to a method of making a braking band.

### PRIOR ART

A brake disc of a vehicle disc brake system comprises an annular structure, or braking band, and a central fixing element, known as a bell, by which the disc is attached to the rotating part of a vehicle suspension, for example a hub. The braking band is provided with opposed braking surfaces adapted to cooperate with friction elements (brake pads), housed in at least one caliper body placed astride of said braking band and integral with a non-rotating component of the vehicle suspension. The controlled interaction between the opposed brake pads and the opposed braking surfaces of the braking band determine by friction a braking action which allows the deceleration or stopping of the vehicle.

In a disc brake, the brake caliper is generally arranged astride the outer peripheral edge of a brake disc, suitable for rotating around an axis of rotation (A-A) defining an axial direction (X-X). In a disc brake, a radial direction (R-R) is also defined, substantially orthogonal to said axial direction (X-X), and a circumferential direction, orthogonal both to said axial direction (X-X) and to said radial direction (R-R), as well as a tangential direction locally, or rather punctually, i.e. in a point of intersection of an axial and radial direction, orthogonal both to said axial direction (X-X) and to said radial direction (R-R).

As known, discs for disc brakes comprise a bell, suitable for associating the disc to a hub of a vehicle, from which an annular portion, called the braking band, extends, intended to cooperate with the brake pads of a caliper. In the case of discs of the ventilated type, the braking band is made by means of two plates facing each other and connected to each other by means of connecting elements, for example in the form of pegs or fins. The outer surfaces of the two plates define opposite braking surfaces, while the inner surfaces define, jointly with the pegs or fins, ventilation channels for disc cooling, channels crossed by the air according to a centrifugal direction during the rotation motion of the disc itself.

Generally, the braking band of the brake disc is made of gray cast iron or steel. In fact, these materials allow good braking performance (especially in terms of limited wear) to be obtained at relatively low costs.

Braking bands made of carbon or carbon-ceramic materials offer much higher performance, but at a much higher cost.

A cheaper alternative to cast iron or steel braking bands is constituted by brake discs with aluminum or aluminum alloy braking bands. The advantage of aluminum discs is essentially linked to the lower weight compared to cast iron or steel discs. However, aluminum discs are subject to greater wear than steel or cast iron discs and are not able to guarantee the same braking performance. On these discs, in fact, the braking temperatures cannot be higher than the softening temperatures of aluminum (200-400°C). This significantly limits the performance thereof. Generally, aluminum discs are therefore provided with protective coatings which serve on the one hand to reduce the wear of the braking band and thus guarantee performance similar to cast iron discs, and on the other to protect the aluminum base from the temperatures that generate when braking.

The limits of traditional discs of cast iron or steel are essentially linked to excessive wear. As far as gray cast iron discs are concerned, another very negative aspect is linked to excessive surface oxidation, with the consequent formation of rust. This aspect affects both the performance of the brake disc and its appearance, as the rust on the brake disc is aesthetically unacceptable to the user.

Similarly to aluminum discs, an attempt has been made to tackle these problems by making the discs in gray cast iron or steel with a protective coating, at least at the braking bands. The protective coating serves on the one hand to reduce the wear of the disc, and on the other hand to protect the gray cast iron base from surface oxidation, thus avoiding the formation of a layer of rust.

Regardless of the metal material with which the braking bands of the brake discs are made (steel, cast iron or aluminum), essentially three macro-categories of techniques for the production of protective coatings may be identified in the prior art:
- application of surface coatings: coatings based on hard and wear-resistant materials (e.g. chromium and tungsten carbides, aluminum oxides) are applied to the brake disc surface. The techniques for applying such coatings are varied; the most used technique is the thermal spray of ceramic powders mixed with suitable metal matrices that allow the coating to adhere to the metal surface; disc surface activation treatments may be provided to facilitate the adhesion of the protective coating, such as, for example, treatments suitable to increase the roughness and/or deposition of intermediate materials;
- reactive/diffusive processes: these are processes in which the metallic material of the braking band is made to react with other substances that modify the chemical-physical state thereof, increasing the surface properties thereof; among these processes we may mention carburization, nitriding, and borination. The reactions may take place both in the gas and liquid phase; in this case, the protective coating is not made up of a layer of materials applied on the disc, but is an integral part of the disc itself;
- "in-situ" formation processes: these are processes that involve the formation on the disc of surface layers, made of materials with suitable features, during the formation of the disc itself or in the step of casting the molten metal (mainly cast iron). Before casting, the elements/substances are introduced into the mold which, in contact with the molten metal, determine the formation of new compounds or simply incorporate elements with the desired properties.

In the prior art, therefore, there are various types of protective coatings for braking bands of brake discs. The protective coatings differ from each other not only in the methods of construction, but also in the improved features given to the braking bands in terms, for example, of resistance to wear and/or to corrosion or to improve the tribological performance.

All the aforementioned protective coatings are subject to wear over time. Depending on the type of coating, the wear phenomenon may be more or less rapid, but wear of the coating is inevitable.

Certain levels being exceeded, the wear of the protective coating may quickly lead to a deterioration of the performance offered by the brake disc. These situations, if not adequately monitored and promptly identified, may seriously compromise the safety of vehicles when braking.

Generally, the evaluation of the state of wear of the protective coating of a brake disc requires the intervention of a specialist technician, as it is practically impossible for the normal user to carry out reliable checks independently. It is therefore inevitable that the monitoring is not continuous, but only periodic.

Continuous monitoring of the discs, which would ensure a higher level of safety, would only be possible if normal users were enabled to assess the state of wear of the protective linings of the brake discs.

Document US 2017/122392 A1 discloses a brake disc comprising a substrate, in particular a grey cast iron substrate, at least one friction surface formed on the substrate, and at least one cover layer having dents and applied at least to the at least one friction surface.

To date, however, this need - much felt - is not satisfied, since there are no brake discs with braking bands that allow a normal user to evaluate the wear of the protective coatings.

### DISCLOSURE OF THE INVENTION

The need to have braking bands of brake discs which allow a normal user to evaluate the state of wear of the protective coatings is met by a braking band of a brake disc according to claim 1, by a brake disc for disc brakes according to claim 10 and by a method for making a braking band according to claim 11.

### DESCRIPTION OF THE DRAWINGS

Further features and advantages of the present invention will appear more clearly from the following description of preferred non-limiting embodiments thereof, in which:

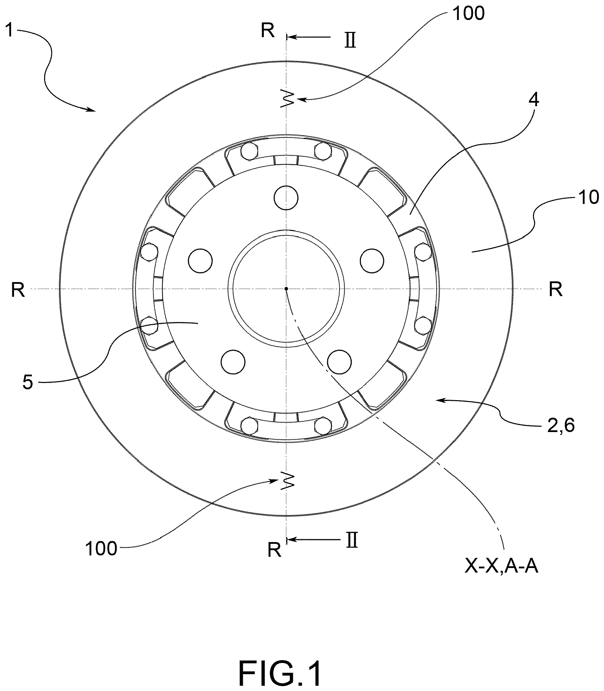

- Figure 1 shows a top plan view of a disc brake according to an embodiment of the present invention, in which the braking band is provided with at least one marking made by way of example in the shape of a "W";

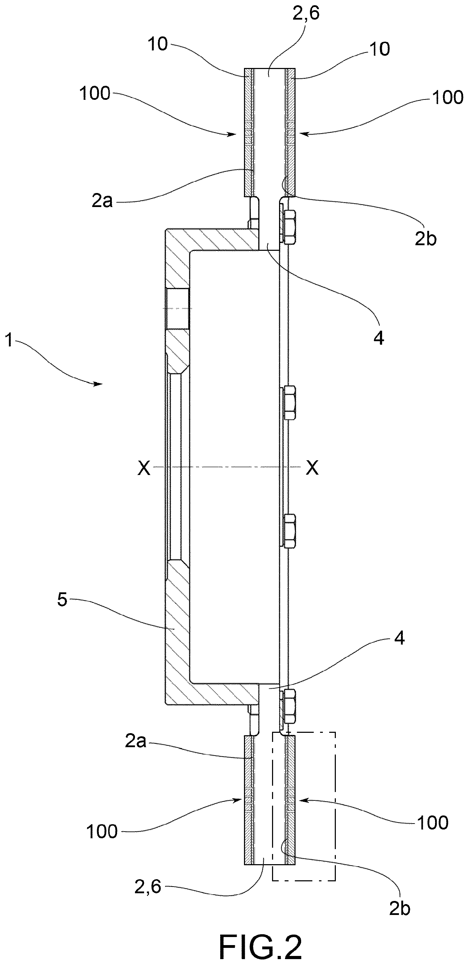

- Figure 2 shows a sectional view of the disc of Figure 1 according to the section line II-II indicated therein, in which the braking band has been schematically illustrated, without respecting the real proportions of the coating layers, in order to make their features graphically appreciable; and

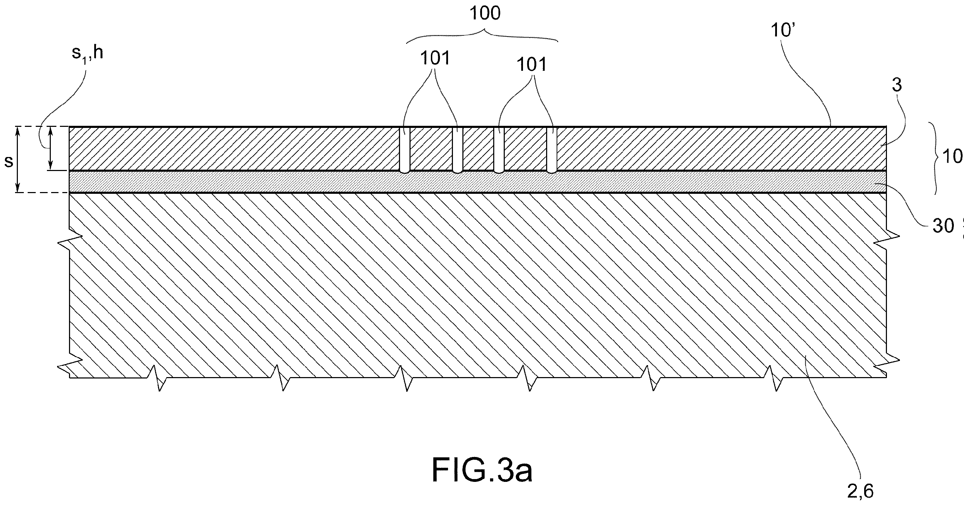

- Figure 3a shows an enlarged detail of Figure 2, relating to a portion of the braking band indicated in the box shown therein, to illustrate an embodiment of the invention in which the recesses forming the aforementioned marking (exemplified in the shape of "W") have a depth equal to the average thickness of a surface coating of the braking surface;

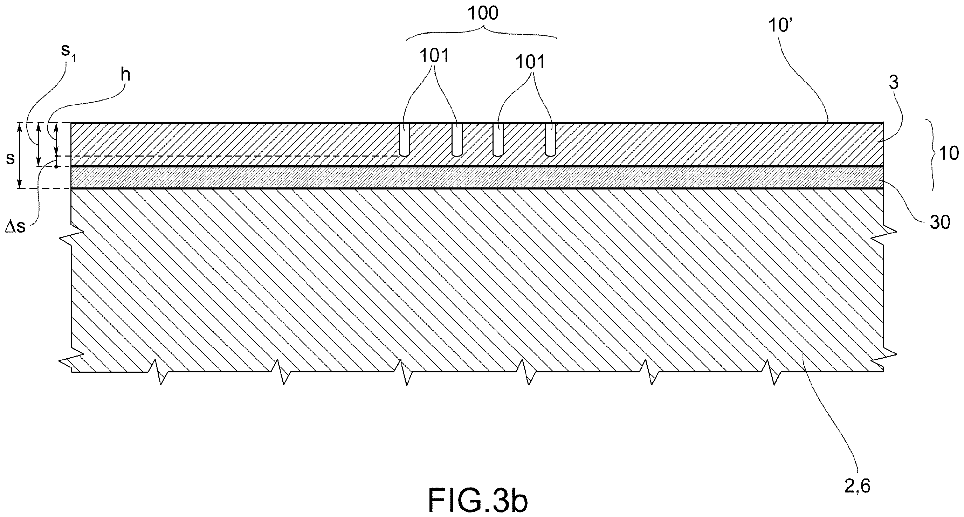

- Figure 3b shows an enlarged detail of Figure 2, relating to a portion of the braking band indicated in the box shown therein, to illustrate an alternative and preferred embodiment of the invention in which the recesses forming the aforementioned marking (exemplified in the form of "W") have a depth less than the average thickness of a surface coating of the braking surface;

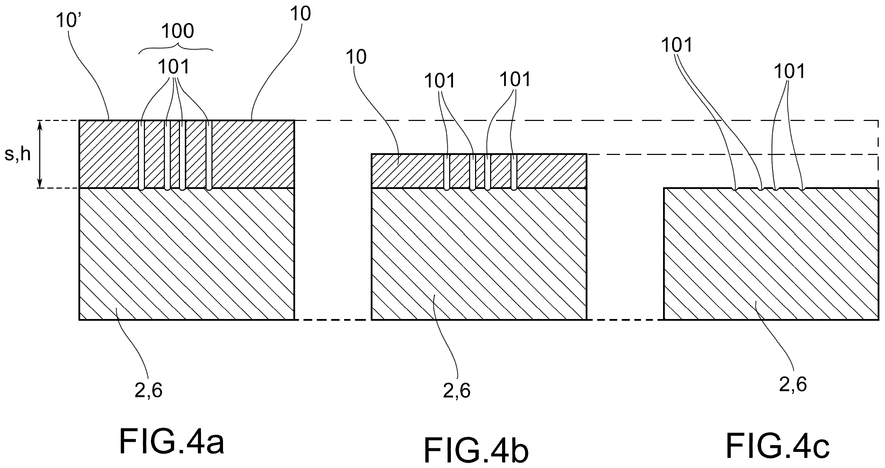

- Figures 4a, 4b and 4c show in sequence - using Figure 3a as an illustrative basis - different states of wear of the surface coating at the "W" shaped marking;

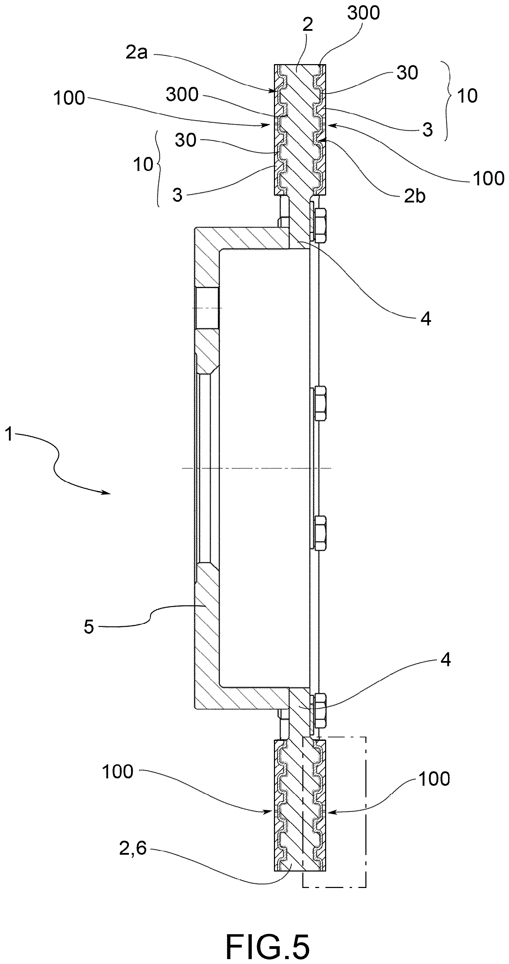

- Figure 5 shows a sectional view of a disc similar to that of Figure 1 obtained, however, according to a different embodiment of the invention, the section being made according to the section line II-II indicated therein, in which the braking band has been illustrated schematically, without respecting the real proportions of the coating layers, in order to make their features graphically appreciable and in which, similarly to what is provided in Figure 2, the marking is made by way of example in the shape of a "W";

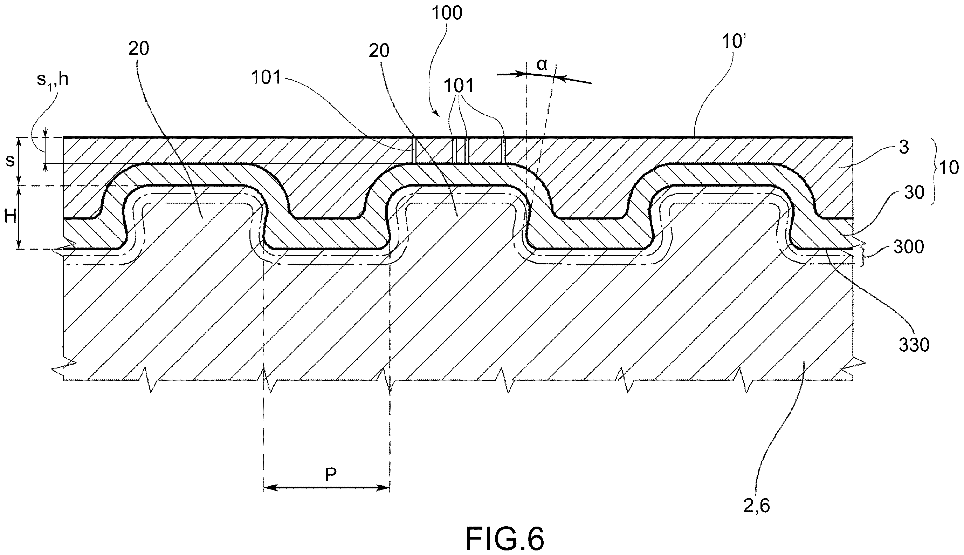

- Figure 6 shows an enlarged detail of Figure 6, relating to a portion of the braking band indicated in the box shown therein; and

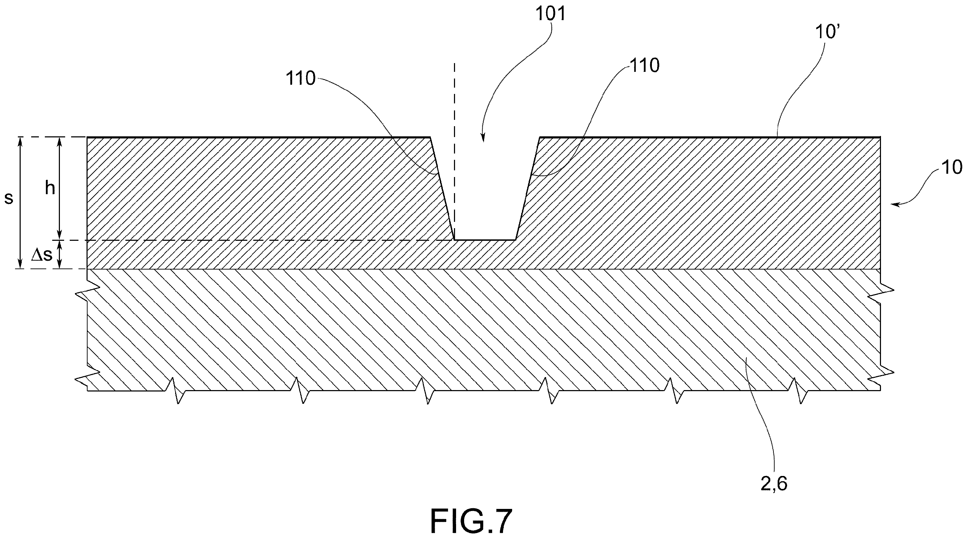

- Figure 7 shows an enlarged sectional view of the disc of Figure 1 according to the section line II-II indicated therein, according to a different embodiment of the invention in which the marking consists of at least one recess which has a surface section - made with respect to a plane parallel to the surface of the surface coating - which is reduced with increasing depth.

Elements or parts of elements common to the embodiments described hereinafter will be indicated with the same numerical references.

### DETAILED DESCRIPTION

With reference to the aforesaid figures, the reference numeral 1 generally indicates a disc brake disc according to the present invention, while the reference numeral 2 indicates a braking band of a disc brake disc according to the invention.

According to a general embodiment of the invention, illustrated in the accompanying figures, the braking band 2 is defined by an annular band body 6 arranged around a brake disc rotation axis or axis of rotation X-X. The aforementioned band body 6 is made of a base metal, preferably gray cast iron or steel or aluminum or its alloys.

Preferably, the braking band is made of gray cast iron, in particular lamellar or globular.

The braking band 2 comprises at least one braking surface 2a or 2b.

Preferably, as illustrated in Figures 1 and 2, the braking band 2 comprises two opposite braking surfaces 2a and 2b, each of which at least partially defines one of the two main faces of the braking band 2.

At least a portion of the aforesaid at least one braking surface 2a or 2b comprises a surface coating 10 suitable to increase the tribological performance and/or the wear and/or corrosion resistance of said braking surface portion with respect to the base metal.

Preferably, the aforementioned surface coating 10 extends to the entire braking surface 2a or 2b, and even more preferably to both braking surfaces 2a and 2b.

The aforementioned surface coating 10 has an average thickness s. The value of such average thickness s is predefined and depends on the type of surface coating 10.

The disc brake disc 1 comprises:
- the aforesaid braking band 2 according to the invention; and
- a bell 5, which is associated with the aforesaid braking band 2 and is suitable for connection to a hub of a vehicle wheel.

Advantageously, the braking band 2 is provided with a portion suitable for fixing the disc to a vehicle, consisting of an annular portion 4 arranged centrally to the braking band 2 and concentric with the latter. The fixing portion 4 supports the connecting element 5 to the wheel hub (i.e. the bell) . The bell may be made in one piece with the annular fixing portion (as illustrated in the accompanying figures) or it may be made separately and, therefore, fixed through suitable connecting elements to the fixing portion.

The annular fixing portion 4 may be made of the same material (base metal) as the braking band, that is, of gray cast iron, or of steel, or of aluminum and its alloys. The bell 5 may also be made of gray cast iron or of steel, or of aluminum and its alloys, or of another suitable material. In particular, the whole disc 1 (i.e. braking band, fixing portion and bell) may be made of gray cast iron.

The annular fixing portion may be made in a single body with the braking band (as illustrated in the accompanying figures) or be made as a separate body, mechanically connected to the braking band.

According to the invention, as illustrated in the accompanying figures, the aforementioned braking band 2 comprises at least one marking 100 which is obtained on the aforementioned surface coating 10.

As shown in particular in Figures 2 and 3, such at least one marking 100 consists of at least one recess 101 which extends from the surface 10' of such surface coating to a predefined depth h not greater than the average thickness s of the surface coating 10.

In use, as schematically illustrated in the sequence of Figures 4a, 4b and 4c, the progressive loss of thickness of the surface coating 10 due to wear causes a corresponding decrease in the depth h of the aforementioned at least one recess 101. The reduction in depth h of the recess 101 thus becomes an indicator of the reduction in the average thickness s of the surface coating 10.

In particular, in the case (represented in Figures 4a, b and c) in which the recess 101 has a depth h equal to the average thickness s of the surface coating 10, when the surface coating 10 is completely worn out, the depth h of the recess 101 is substantially zeroed. In this situation, the marking 100 disappears from the surface of the braking band 2a or 2b.

Operationally, the aforementioned marking 100 thus acts as an indicator of wear of the surface coating 10.

This marking 100 therefore enables a normal user to monitor the state of wear of the surface coating 10 of the braking band and therefore to schedule the necessary interventions in time, such as, for example, a more accurate check by a specialist technician or directly replacement of the braking band 2.

By virtue of the invention it is therefore possible to carry out a continuous monitoring of the discs, thus guaranteeing a higher level of safety.

Preferably, the aforesaid at least one recess 101 is visible to the naked eye, whereby "visible to the naked eye" means having dimensions such as to be visible to the human eye without the use of optical magnification instruments. In this way, the marking 100 allows a normal user not only to evaluate the state of wear of the surface coating, but also to do so in a simple and immediate manner. In fact, by virtue of the fact that the aforementioned recess 101 (and therefore the marking) is visible to the naked eye, the evaluation may be made simply by observing the braking band at the marking 100 itself.

This makes continuous monitoring of discs by a normal user even more convenient and easier.

According to non-preferred embodiments, the aforesaid at least one recess 101 may not be visible to the naked eye, in the sense of having dimensions such as not to be visible to the human eye without the use of optical magnification instruments. Preferably, in this case, the aforesaid recess may be made of such dimensions as to be visible with a normal magnifying glass, which the normal user may easily provide himself/herself with or which he/she may receive supplied from the disc supplier together with the set of discs. Such embodiment may be adopted if the size of the marking 100 is to be reduced to a minimum, in order to limit the impact of the marking on the braking band from an aesthetic and/or operational point of view.

As already described above, the aforementioned at least one recess 101 extends from the surface 10' of the surface coating up to a predefined depth h which should not be greater than the average thickness s of the surface coating 10.

In particular, as illustrated in Figures 4a-c, the recess 101 may have a depth h equal to the average thickness s of the surface coating 10. In this case, when the surface coating 10 is completely worn out, the depth h of the recess 101 is substantially zeroed. Therefore, when the marking 100 disappears from the surface of the braking band 2a or 2b, the normal user receives the indication that the surface coating 10 is substantially worn out and it is necessary to immediately replace the braking band 2.

Preferably, as illustrated in Figure 7, the predefined depth h of the aforesaid at least one recess 101 is less than the average thickness s of the surface coating 10 for a predefined safety thickness Δs. In this way, when in use due to wear the depth h of said at least one recess 101 is zeroed, an average residual thickness of said surface coating 10 equal to said predefined safety thickness Δs still remains available. Therefore, by virtue of such preferred embodiment, when the marking 100 disappears from the surface of the braking band 2a or 2b, the normal user receives the indication that the surface coating 10 is now close to the final stage of consumption and it is necessary to schedule the replacement of the braking band 2. When such indication emerges from the marking 100, the surface coating still retains a reserve of operational autonomy, allowing the disc to still operate in complete safety. The user may therefore schedule the replacement of the braking band 2 without necessarily having to interrupt the use of the vehicle.

Advantageously, the value of the predefined safety thickness Δs is selected on the basis of the features of the specific surface coating (for example, average degree of wear) and the temporal autonomy of residual use that the user intends to leave between the disappearance of the marking and the obligation to replace the braking band.

According to a particular embodiment of the invention, at least a portion of the aforementioned at least one recess 101 has a surface section (or imprint) - made with respect to a plane parallel to the surface of the surface coating - which decreases as the depth of said at least one recess increases. In this way, the progressive loss of thickness of the surface coating 10 due to wear determines not only a corresponding decrease in the depth h of the aforesaid at least one recess 101, but also a reduction in its surface section (or imprint). The degree of reduction of the section or surface imprint of the recess 101 may be evaluated more immediately than the reduction of the depth and therefore allows a simpler and visually more immediate estimate of the state of wear of the surface coating. In particular, as shown in Figure 7, the recess 101 may be made so as to extend in the direction of depth with one or more side walls 110 angled with respect to a direction perpendicular to the surface of the surface coating 10.

Preferably, the aforementioned at least one recess 101 has a surface extension such as not to interfere with the operation of the disc brake fitted with a disc 1 comprising the aforementioned braking band 2. In particular, the aforesaid at least one recess, and in general the marking 100, should not have a surface extension such as to prevent friction between the pads and the braking surface. More in detail, in some of its portions the single recess 101 should have dimensions such as to accommodate a braking pad therein.

Advantageously, as illustrated in Figure 1, the aforesaid at least one recess 101 extends on the surface according to a predefined pattern.

In the exemplary case of Figure 1, the marking 100 consists of a single recess 101 made as a groove having a surface extension which follows a broken line in the shape of a "W".

Advantageously, the single recess 101 may involve a localized and very limited portion of the braking surface (as shown in Figure 1), or it may involve an extended portion of the braking surface. For example, the single groove 101 may be defined by a groove which extends, in particular circumferentially, around the brake disc rotation axis or axis of rotation X-X.

The marking 100 may consist of two or more grooves combined together to form complex patterns.

As illustrated in Figure 1, the braking band 2 may comprise two or more distinct markings 100, distributed on the braking surface 2a. In the exemplary case of Figure 1, the two markings 100 are made on the braking band 2 in diametrically opposite positions.

Advantageously, the predefined pattern according to which the aforementioned at least one recess extends on the surface may also have an aesthetic or identifying function. Specifically, the predefined pattern is in the shape of a predefined logo or trademark.

Operationally, the aforesaid at least one recess may be obtained on the surface coating with any process suitable for the purpose and selected according to the type of coating.

In particular, the aforesaid at least one recess 101 may be obtained with a process:
- by chip removal;
- by laser engraving;
- by water jet engraving; or
- by plastic deformation.

The surface coating 10 which extends on at least a portion of the aforesaid at least one braking surface 2a or 2b may be of any type, provided that it is suitable to increase the tribological performance and/or the wear and/or corrosion resistance of said braking surface portion with respect to the base metal.

According to an embodiment of the invention, the aforementioned surface coating 10 may consist of a chemically modified base metal layer.

More in detail, such surface coating may be obtained in particular after the formation of the braking band in the base metal by reactive/diffusive processes. These are processes in which the metallic material of the braking band is made to react with other substances that modify the chemical-physical state thereof, increasing the surface properties thereof; among these processes we may mention carburization, nitriding, and borination.

Alternatively, such surface coating may be obtained during the formation of the braking band in the base metal by "in-situ" formation processes. These are processes that involve the formation on the disc of surface layers, made of materials with suitable features, during the formation of the disc itself or in the step of casting the molten metal. Before casting, the elements/substances are introduced into the mold which, in contact with the molten metal, determine the formation of new compounds or simply incorporate elements with the desired properties.

In both cases, the surface coating is not made up of a layer of materials applied to the braking band, but is an integral part of the braking band itself.

According to an alternative embodiment of the invention, the aforementioned surface coating 10 may consist of at least one layer of material deposited over the base metal with which the band body 6 of the braking band 2 is made.

In particular, the surface coating 10 may consist of a single layer of material (as shown in Figure 7) or of two or more superimposed layers of the same material, or still alternatively, the aforementioned surface coating 10 may consist of two or more superimposed layers 3 and 30, of different materials, as illustrated in Figures 3a, 3b and 6.

Preferably, in the case of two or more superimposed layers 3 and 30 of different materials, the outermost layer 3 of the surface coating 10 is suitable to increase the tribological performance and/or the resistance to wear and/or corrosion of such braking surface portion with respect to the base metal, while the innermost layers 30 are suitable to favor the adhesion of the outermost layer 3 to the base metal, improving for example the mechanical strength thereof.

In the case of two or more superimposed layers of different materials, in which only the outermost layer 3 of the surface coating is suitable to increase the tribological performance and/or the resistance to wear and/or corrosion of such braking surface portion with respect to the base metal, the recess 101 has a depth h not greater (and preferably less) than the average thickness s1 of the outermost layer 3 of the surface coating 10, as illustrated in Figures 3a and 3b. In this way, the marking 100 acts as an indicator of the state of wear of only the outermost layer 3 of the surface coating 10.

Advantageously, as illustrated in Figures 5 and 6, the portion of the aforesaid at least one braking surface 2a or 2b covered by the surface coating 10 may have a rough profile in radial or circumferential section with respect to the center of the braking band. The presence of such rough profile favors the adhesion of the surface coating to the base metal.

Preferably, as illustrated in Figures 5 and 6, the surface coating 10 is made in accordance with international application PCT/IB2019/060719 filed in the name of the same holder, the entire content of which is incorporated herein by reference.

More in detail, in accordance with PCT/IB2019/060719 the aforementioned band body 6 consists of a base metal selected from gray cast iron or steel.

The aforesaid surface coating 10 consists of:
- a base protective layer 30 which consists of chromium carbide (Cr3C2) and Nickel-Chromium (NiCr), or Nickel-Chromium (NiCr), Iron (Fe), Molybdenum (Mo), Cobalt (Co), Manganese (Mn) and Aluminum (Al), and is obtained by deposition with a spray deposition technique, preferably with HVOF (High Velocity Oxygen Fuel) technique, or HVAF (High Velocity Air Fuel) technique or KM (Kinetic Metallization) technique; and
- a surface protective coating 3 which is constituted by tungsten carbide (WC), iron (Fe), chromium (Cr) and aluminum (Al) and is obtained by depositing on the base protective layer (30) tungsten carbide (WC), iron (Fe), chromium (Cr) and aluminum (Al) in particle form with a spray deposition technique, preferably with HVOF (High Velocity Oxygen Fuel) technique or HVAF (High Velocity Air Fuel) technique or KM (Kinetic Metallization) technique.

The portion of the aforesaid at least one braking surface 2a or 2b coated by said base protective layer 30 is defined by a nitrocarburized layer 300 of said base metal and has a rough profile in radial or circumferential cross-section with respect to the center of the braking band.

The protective base layer 30 is therefore attached not directly to the base metal which forms the braking band, but to the aforementioned nitrocarburized layer 300 of such base metal.

In particular, the aforementioned rough profile is defined by a plurality of protuberances 20 which extend orthogonally to the surface with a height H comprised between 30 and 200 µm and are spaced relative to each other - in a radial or circumferential direction with respect to the center of the braking band - with a pitch between 300 and 2000 µm. Preferably, the aforementioned protuberances are distributed according to a regular pattern on the braking surface of the braking band 2. However, it is also possible to provide a distribution according to an irregular pattern.

Advantageously, as schematically illustrated in Figure 6, the aforementioned protuberances 20 have an undercut angle α with respect to the direction orthogonal to the surface from which they extend. Preferably, the aforementioned undercut angle α is comprised between 2° and 15°.

According to an alternative embodiment, the aforementioned rough profile may have a roughness Ra between 0.8 and 2 if obtained by turning, or a roughness Rz between 10 and 80 if obtained by sandblasting.

Preferably, the aforementioned nitrocarburized layer 300 is obtained by means of a ferritic nitrocarburizing treatment of the base metal.

According to a preferred embodiment, the nitrocarburized layer 300 has a depth of between 2 and 30 µm and hardness values higher than 300 HV in microhardness.

According to a particularly preferred embodiment, the aforementioned nitrocarburized layer 300 comprises an oxidized top layer 330 comprising magnetite Fe3O4 which acts as an interface with the aforementioned protective base layer 30.

Preferably, the aforesaid oxidized top layer 330 comprising magnetite Fe3O4 has a thickness comprised between 2 and 10 µm.

Preferably, the base protective layer 30 consists of:
- 65% to 95% chromium carbide (Cr3C2) and the balance of Nickel-Chromium (NiCr) or
- Nickel-Chromium (NiCr) with content by weight of Nickel (Ni) from 40% to 75% and with content by weight of Chromium (Cr) from 14% to 30%, and the balance of Iron (Fe), Molybdenum (Mo), Cobalt (Co), Manganese (Mn) and Aluminum (Al).

In particular, the base protective layer 30 may have the following compositions:
- 93% by weight of chromium carbide (Cr3C2) and 7% Nickel-Chromium (NiCr);
- 90% by weight of chromium carbide (Cr3C2) and 10% Nickel-Chromium (NiCr);
- 75% by weight of chromium carbide (Cr3C2) and 25% Nickel-Chromium (NiCr); or
- 65% by weight of chromium carbide (Cr3C2) and 35% Nickel-Chromium (NiCr).

Preferably, the base protective layer 30 consists of 75% by weight chromium carbide (Cr3C2) and 25% Nickel-Chromium (NiCr). In particular, Nickel-Chromium (NiCr) is made up of 80% Nickel and 20% Chromium.

Preferably, the surface protective layer 3 consists of 75% to 87% by weight tungsten carbide (WC) and the balance of iron (Fe), chromium (Cr) and aluminum (Al). Even more preferably, the surface protective layer 3 consists of 85% by weight tungsten carbide (WC) and 15% by weight iron (Fe), chromium (Cr) and aluminum (Al).

Advantageously, the protective base layer 30 has a thickness between 20 um and 80 µm, and preferably equal to 50 um, while the protective surface layer 3 has a thickness between 20 um and 90 µm, and preferably equal to 60 um. The thickness of the two protective coatings 3 and 30 is calculated in relation to the portions of the coating overlying the rough layer. Therefore, these are minimum thickness values, which do not take into account the thickness of the coating possibly intended to fill the hollows/pits of the roughness.

As a whole, as schematically illustrated in Figure 6, the two protective coatings 3 and 30 completely fill the roughness of the braking surface and extend above the rough profile with layers having thicknesses preferably within the ranges specified above.

In this case, the average thickness s of the surface coating 10 - given by the sum of the two protective layers, surface 3 and base 30 - is defined as the minimum average thickness, calculated in relation to the portions of the coating overlying the rough layer.

As schematically illustrated in Figure 6, the aforementioned at least one recess 101 which constitutes the marking 100 has a depth h not greater than, and preferably less than, the average thickness S1 of the surface protective layer 3.

The presence of the aforementioned nitrocarburized layer 300 at the interface between the unmodified base metal and the protective base layer 30 allows the occurrence of flaking phenomena of the coatings to be significantly reduced, if not completely zeroed, compared to braking bands provided with similar protective coatings but without nitrocarburized layer.

A possible technical explanation, to which however we do not want to limit ourselves, is based on the fact that, unlike traditional protective coatings, the nitrocarburized layer protects the base metal from corrosion without however consisting of a layer of material applied to the base metal itself. In other words, there is no net separation surface between the unmodified base metal and the nitrocarburized layer 300. The nitrocarburized layer is in fact a base metal layer morphologically and chemically modified through a nitrocarburizing process. The transition from unmodified base metal to nitrocarburized metal could therefore be progressive.

From this point of view, the rough profile of the braking surface, at which the nitrocarburized layer 300 is made, further accentuates the irregularity in the transition from nitrocarburized metal to unmodified base metal, enhancing the positive effects.

The rough profile of the braking surface, at which the nitrocarburized layer 300 is made, also facilitates the mechanical adhesion of the protective base layer 30 to the nitrocarburized layer.

It has also been experimentally verified that the presence of the nitrocarburized layer 300 does not affect the performance of the surface protective layer 3 in terms of both wear resistance and tribological behavior (friction, fading, running-in) in normal environmental conditions.

Finally, it has been experimentally verified that the presence of the nitrocarburized layer 300 improves the resistance in the presence of environmental stresses (thermal shocks and salt attacks).

The anticorrosive action offered by the nitrocarburized layer is accentuated in the preferred case in which the nitrocarburized layer 300 comprises an oxidized top layer 330 comprising magnetite Fe3O4.

Such anticorrosive action is in any case further enhanced by the presence of the base coating layer 30. By virtue of the composition of such protective base layer 30 (Cr3C2 and NiCr, or NiCr, Fe, Mo, Co, Mn and Al) and of the deposition method, such coating 30 also performs an anticorrosive action on the braking surface of the disc.

The anticorrosive action benefits the integrity and adhesion of the protective surface layer 3 to the braking band 2.

The protective base layer 30 also performs a mechanical "cushioning" function for the surface protective layer 3 (anti-wear). The protective base layer 30 formed by Cr3C2 and NiCr, or by NiCr, Fe, Mo, Co, Mn and Al has, in fact, a higher degree of ductility than the surface protective layer 3 formed by tungsten carbide, iron, chromium and aluminum. This gives the base layer 30 an elastic behavior which allows the stresses imparted to the disc to be attenuated at least in part when in use. The base protective layer 30 therefore operates as a sort of shock absorber or cushion between the disc and the surface protective layer 3. In this way, a direct transmission of stresses between the two parts is avoided, thus reducing the risk of initiation of cracks in the protective surface layer 3.

With regard to the anti-wear function, the surface protective layer 3 is neither influenced by the presence of the protective base layer 30 nor by the presence of the nitrocarburized layer 300 (possibly with an oxidized top layer 330).

A further object of the present invention is a method for making a braking band 2 according to the invention and in particular as described above.

More in detail, such method comprises the following operating steps:
- providing a braking band 2 comprising at least one braking surface 2a or 2b, the braking band 2 being defined by a band body 6 made of a base metal, preferably gray cast iron or steel or aluminum or its alloys;
- making on at least a portion of said at least one braking surface 2a or 2b a surface coating 10 suitable to increase the tribological performance and/or the resistance to wear and/or to corrosion of said portion of braking surface with respect to said base metal, said surface coating 10 having an average thickness s.

According to the invention, the method comprises an operating step of making at least one marking 100 on said surface coating 10, consisting of at least one recess 101 which extends from the surface of said surface coating to a predefined depth h not exceeding the average thickness s of said surface coating 10.

As previously explained, in use the loss of thickness of the surface coating 10 due to wear causes a corresponding decrease in the depth h of said at least one recess 101. The aforementioned marking 100 thus acts as an indicator of wear of said surface coating 10.

As may be seen from the above description, the braking band 2 and the disc brake disc 1 according to the invention allow the drawbacks of the prior art to be overcome.

A person skilled in the art may make several changes and adjustments to the braking band and to the disc brake disc described above in order to meet specific and incidental needs, all falling within the scope of protection defined in the following claims.

## Claims

1. Braking band (2) of a disc brake disc (1), said braking band (2) being defined by an annular band body (6) arranged around a brake disc rotation axis or axis of rotation (X-X); said band body (6) being made of a base metal, preferably grey cast iron or steel or aluminum or its alloys; said braking band (2) comprising at least one braking surface (2a or 2b); wherein at least one portion of said at least one braking surface (2a or 2b) comprises a surface coating (10) suitable to increase the tribological performance and/or resistance to wear and/or to corrosion of said portion of the braking surface with respect to said base metal, said surface coating (10) having an average thickness (s),
wherein said braking band (2) comprises at least one marking (100) which is made on said surface coating (10) and consists of at least one recess (101) extending from the surface of said surface coating to a predefined depth (h) not exceeding the average thickness (s) of said surface coating (10), in use the loss of thickness of the surface coating (10) due to wear resulting in a corresponding decrease in depth (h) of said at least one recess (101), said marking (100) thus acting as an indicator of consumption of said surface coating (10),
wherein said surface coating (3) consists of at least one layer of material deposited on top of the base metal which said band body (6) is made of,
wherein said surface coating (3) consists of two or more superimposed layers, preferably of different materials,
wherein said band body (6) consists of a base metal chosen from grey cast iron or steel,
wherein said surface coating (10) consists of:
- a base protective layer (30) which consists of chromium carbide (Cr3C2) and Nickel-Chromium (NiCr), or Nickel-Chromium (NiCr), Iron (Fe), Molybdenum (Mo), Cobalt (Co), Manganese (Mn) and Aluminium (Al), and is obtained by deposition with a spray deposition technique, preferably with HVOF (High Velocity Oxygen Fuel) technique, or HVAF (High Velocity Air Fuel) technique or KM (Kinetic Metallization) technique; and
- a surface protective coating (3) which is constituted by tungsten carbide (WC), iron (Fe), chromium (Cr) and aluminum (Al) and is obtained by depositing on the base protective layer (30) tungsten carbide (WC), iron (Fe), chromium (Cr) and aluminum (Al) in particle form with a spray deposition technique, preferably with HVOF (High Velocity Oxygen Fuel) technique or HVAF (High Velocity Air Fuel) technique or KM (Kinetic Metallization) technique,
and wherein the portion of said at least one braking surface (2a or 2b) coated by said base protective layer (30) is defined by a nitrocarburized layer (300) of said base metal and has a rough profile in radial or circumferential cross-section with respect to the centre of the braking band.

2. The band according to claim 1, wherein said at least one recess (101) is visible, preferably with the naked eye.

3. The band according to claim 1 or 2, wherein the predefined depth (h) of said at least one recess (101) is less than the average thickness (s) of said surface protective layer (10) by a predefined safety thickness (Δs), so that, when in use the depth (h) of said at least one recess (101) is zeroed due to wear, an average residual thickness of said surface coating (10) equal to said predefined safety thickness (Δs) is still available.

4. The band according to any one of the preceding claims, wherein said at least one recess (101) has a surface extension such as not to interfere with the operation of the disc brake fitted with a disc comprising said braking band.

5. The band according to any one of the preceding claims, wherein said at least one recess (101) extends on the surface according to a predefined pattern.

6. The band according to claim 5, wherein said predefined pattern also has an aesthetic or identifying function, preferably said predefined pattern having the shape of a predefined logo or trademark.

7. The band according to any one of the preceding claims wherein at least a portion of said at least one recess (101) has a surface section - made with respect to a plane parallel to the surface of the surface coating - which decreases as the depth of said at least one recess increases.

8. The band according to any one of the preceding claims, wherein said at least one recess is obtained by chip removal machining or by laser engraving or by water jet engraving or by plastic deformation.

9. The band according to any one of the preceding claims, wherein the at least one portion of said braking surface (2a or 2b) coated by said surface coating (10) has a rough profile in the radial or circumferential cross-section with respect to the centre of the braking band.

10. A disc brake disc (1) comprising a braking band (2) as defined by any one of the preceding claims and a bell (5) associated with said braking band (2) and suitable for connection to a vehicle wheel hub.

11. A method of making a braking band (2) comprising the following operating steps:
- providing a braking band (2) comprising at least one braking surface (2a or 2b), the braking band (2) being defined by a band body (6) made of a base metal, preferably grey cast iron or steel or aluminum or its alloys;
- making on at least a portion of said at least one braking surface (2a or 2b) a surface coating (10) suitable to increase the tribological performance and/or the resistance to wear and/or to corrosion of said portion of braking surface with respect to said base metal, said surface coating (10) having an average thickness (s),
wherein it comprises an operating step of making on said surface coating (10) at least one marking (100) consisting of at least one recess (101) extending from the surface of said surface coating to a predefined depth (h) not exceeding the average thickness (s) of said surface coating (10), in use the loss of thickness of the surface coating (10) due to wear resulting in a corresponding decrease in depth (h) of said at least one recess (101), said marking (100) thus acting as an indicator of consumption of said surface coating (10),
wherein said surface coating (3) consists of at least one layer of material deposited on top of the base metal which said band body (6) is made of,
wherein said surface coating (3) consists of two or more superimposed layers, preferably of different materials,
wherein said band body (6) consists of a base metal chosen from grey cast iron or steel,
**characterized in that** said surface coating (10) consists of:
- a base protective layer (30) which consists of chromium carbide (Cr3C2) and Nickel-Chromium (NiCr), or Nickel-Chromium (NiCr), Iron (Fe), Molybdenum (Mo), Cobalt (Co), Manganese (Mn) and Aluminium (Al), and is obtained by deposition with a spray deposition technique, preferably with HVOF (High Velocity Oxygen Fuel) technique, or HVAF (High Velocity Air Fuel) technique or KM (Kinetic Metallization) technique; and
- a surface protective coating (3) which is constituted by tungsten carbide (WC), iron (Fe), chromium (Cr) and aluminum (Al) and is obtained by depositing on the base protective layer (30) tungsten carbide (WC), iron (Fe), chromium (Cr) and aluminum (Al) in particle form with a spray deposition technique, preferably with HVOF (High Velocity Oxygen Fuel) technique or HVAF (High Velocity Air Fuel) technique or KM (Kinetic Metallization) technique,
and **in that** the portion of said at least one braking surface (2a or 2b) coated by said base protective layer (30) is defined by a nitrocarburized layer (300) of said base metal and has a rough profile in radial or circumferential cross-section with respect to the centre of the braking band.

## Patentansprüche

1. Bremsband (2) einer Scheibenbremsscheibe (1), wobei das Bremsband (2) durch einen ringförmigen Bandkörper (6) definiert ist, welcher um eine Bremsscheiben-Rotationsachse oder Rotationsachse (X-X) angeordnet ist; wobei der Bandkörper (6) aus einem Basismetall hergestellt ist, vorzugsweise Grauguss oder Stahl oder Aluminium oder deren Legierungen; wobei das Bremsband (2) wenigstens eine Bremsfläche (2a oder 2b) umfasst; wobei wenigstens ein Abschnitt der wenigstens einen Bremsfläche (2a oder 2b) eine Oberflächenbeschichtung (10) umfasst, welche dazu geeignet ist, die tribologische Leistungsfähigkeit und/oder den Widerstand gegen Verschleiß und/oder Korrosion des Abschnitts der Bremsfläche in Bezug auf das Basismetall zu erhöhen, wobei die Oberflächenbeschichtung (10) eine durchschnittliche Dicke (s) aufweist,
wobei das Bremsband (2) wenigstens eine Markierung (100) umfasst, welche auf der Oberflächenbeschichtung (10) erzeugt ist und aus wenigstens einer Aussparung (101) besteht, welche sich von der Oberfläche der Oberflächenbeschichtung zu einer vordefinierten Tiefe (h) erstreckt, welche die durchschnittliche Dicke (s) der Oberflächenbeschichtung (10) nicht übersteigt, wobei der Rückgang der Dicke der Oberflächenbeschichtung (10) aufgrund von Verschleiß bei Verwendung in einer entsprechenden Abnahme der Tiefe (h) der wenigstens einen Aussparung (101) resultiert, wobei die Markierung (100) dadurch als ein Indikator eines Verbrauchs der Oberflächenbeschichtung (10) wirkt,
wobei die Oberflächenbeschichtung (3) aus wenigstens einer Schicht eines Materials besteht, welches auf dem Basismetall abgelagert ist, aus welchem der Bandkörper (6) hergestellt ist,
wobei die Oberflächenbeschichtung (3) aus zwei oder mehr übereinanderliegenden Schichten besteht, vorzugsweise aus unterschiedlichen Materialien,
wobei der Bandkörper (6) aus einem Basismetall besteht, welches aus Grauguss oder Stahl ausgewählt ist,
wobei die Oberflächenbeschichtung (10) besteht aus:
- einer Basisschutzschicht (30), welche aus Chromcarbid (Cr3C2) und Nickel-Chrom (NiCr), oder Nickel-Chrom (NiCr), Eisen (Fe), Molybdän (Mo), Kobalt (Co), Mangan (Mn) und Aluminium (Al) besteht, und welche durch Ablagerung mittels einer Sprüh-Ablagerungsmethode erhalten worden ist, vorzugsweise mittels einer HVOF-(High-Velocity-Oxygen-Fuel)-Methode oder einer HVAF-(High-Velocity-Air-Fuel)-Methode oder einer KM-(Kinetic-Metallization)-Methode; und
- einer Oberflächenschutzschicht (3), welche aus Wolframcarbid (WC), Eisen (Fe), Chrom (Cr) und Aluminium (Al) besteht, und welche durch Ablagern von Wolframcarbid (WC), Eisen (Fe), Chrom (Cr) und Aluminium (Al) in Partikelform mittels einer Sprüh-Ablagerungsmethode, vorzugsweise mittels einer HVOF-(High-Velocity-Oxygen-Fuel)-Methode oder einer HVAF-(High-Velocity-Air-Fuel)-Methode oder einer KM-(Kinetic-Metallization)-Methode, an der Basisschutzschicht (30) erhalten worden ist,
und wobei der Abschnitt der wenigstens einen Bremsfläche (2a oder 2b), welche durch die Basisschutzschicht (30) beschichtet ist, durch eine nitrocarburierte Schicht (300) des Basismetalls definiert ist und in Bezug auf das Zentrum des Bremsbands in einem radialen oder einem peripheren Querschnitt ein unebenes Profil aufweist.

2. Band nach Anspruch 1, wobei die wenigstens eine Aussparung (101) sichtbar ist, vorzugsweise mit dem bloßen Auge.

3. Band nach Anspruch 1 oder 2, wobei die vordefinierte Tiefe (h) der wenigstens einen Aussparung (101) um eine vordefinierte Sicherheitsdicke (Δs) weniger als die durchschnittliche Dicke (s) der Oberflächenschutzschicht (10) beträgt, sodass, wenn die Tiefe (h) der wenigstens einen Aussparung (101) bei Verwendung aufgrund von Verschleiß genullt wird, eine durchschnittliche verbleibende Dicke der Oberflächenbeschichtung (10), welche gleich der vordefinierten Sicherheitsdicke (Δs) ist, weiterhin vorhanden ist.

4. Band nach einem der vorhergehenden Ansprüche, wobei die wenigstens eine Aussparung (101) eine Oberflächenerstreckung aufweist, sodass sie die Betätigung der Scheibenbremse nicht beeinträchtigt, welche mit einer das Bremsband umfassenden Scheibe ausgestattet ist.

5. Band nach einem der vorhergehenden Ansprüche, wobei sich die wenigstens eine Aussparung (101) an der Oberfläche gemäß einem vordefinierten Muster erstreckt.

6. Band nach Anspruch 5, wobei das vordefinierte Muster außerdem eine ästhetische oder identifizierende Funktion aufweist, vorzugsweise wobei das vordefinierte Muster die Form eines vordefinierten Logos oder Markenzeichens aufweist.

7. Band nach einem der vorhergehenden Ansprüche, wobei wenigstens ein Abschnitt der wenigstens einen Aussparung (101) einen Oberflächenbereich aufweist - welcher in Bezug auf eine Ebene erzeugt worden ist, welche parallel zu der Oberfläche der Oberflächenbeschichtung ist - welcher abnimmt, wenn die Tiefe der wenigstens einen Aussparung zunimmt.

8. Band nach einem der vorhergehenden Ansprüche, wobei die wenigstens eine Aussparung durch zerspanende Bearbeitung oder durch Lasergravur oder durch Wasserstrahlgravur oder durch plastische Deformation erhalten worden ist.

9. Band nach einem der vorhergehenden Ansprüche, wobei der wenigstens eine Abschnitt der Bremsfläche (2a oder 2b), welcher durch die Oberflächenbeschichtung (10) beschichtet ist, in Bezug auf das Zentrum des Bremsbands in dem radialen oder dem peripheren Querschnitt ein unebenes Profil aufweist.

10. Scheibenbremsscheibe (1), umfassend ein nach einem der vorhergehenden Ansprüche definiertes Bremsband (2) und eine Glocke (5), welche mit dem Bremsband (2) assoziiert ist und für eine Verbindung mit einer Fahrzeugradnabe geeignet ist.

11. Verfahren eines Herstellens eines Bremsbands (2), umfassend die folgenden Betriebsschritte:
- Bereitstellen eines Bremsbands (2), welches wenigstens eine Bremsfläche (2a oder 2b) umfasst, wobei das Bremsband (2) durch einen Bandkörper (6) definiert ist, welcher aus einem Basismetall hergestellt ist, vorzugsweise Grauguss oder Stahl oder Aluminium oder deren Legierungen;
- Herstellen wenigstens einer Oberflächenbeschichtung (10) auf wenigstens einem Abschnitt der wenigstens einen Bremsfläche (2a oder 2b), welche dazu geeignet ist, die tribologische Leistungsfähigkeit und/oder den Widerstand gegen Verschleiß und/oder Korrosion des Abschnitts der Bremsfläche in Bezug auf das Basismetall zu erhöhen, wobei die Oberflächenbeschichtung (10) eine durchschnittliche Dicke (s) aufweist,
wobei es einen Betätigungsschritt eines Herstellens wenigstens einer Markierung (100) auf der Oberflächenbeschichtung (10) umfasst, welche aus wenigstens einer Aussparung (101) besteht, welche sich von der Oberfläche der Oberflächenbeschichtung zu einer vordefinierten Tiefe (h) erstreckt, welche die durchschnittliche Dicke (s) der Oberflächenbeschichtung (10) nicht übersteigt, wobei der Rückgang der Dicke der Oberflächenbeschichtung (10) aufgrund von Verschleiß bei Verwendung in einer entsprechenden Abnahme der Tiefe (h) der wenigstens einen Aussparung (101) resultiert, wobei die Markierung (100) dadurch als ein Indikator eines Verbrauchs der Oberflächenbeschichtung (10) wirkt,
wobei die Oberflächenbeschichtung (3) aus wenigstens einer Schicht eines Materials besteht, welches auf dem Basismetall abgelagert ist, aus welchem der Bandkörper (6) hergestellt ist,
wobei die Oberflächenbeschichtung (3) aus zwei oder mehr übereinanderliegenden Schichten besteht, vorzugsweise aus unterschiedlichen Materialien,
wobei der Bandkörper (6) aus einem Basismetall besteht, welches aus Grauguss oder Stahl ausgewählt ist,
**dadurch gekennzeichnet, dass** die Oberflächenbeschichtung (10) besteht aus:
- einer Basisschutzschicht (30), welche aus Chromcarbid (Cr3C2) und Nickel-Chrom (NiCr), oder Nickel-Chrom (NiCr), Eisen (Fe), Molybdän (Mo), Kobalt (Co), Mangan (Mn) und Aluminium (Al) besteht, und welche durch Ablagerung mittels einer Sprüh-Ablagerungsmethode erhalten worden ist, vorzugsweise mittels einer HVOF-(High-Velocity-Oxygen-Fuel)-Methode oder einer HVAF-(High-Velocity-Air-Fuel)-Methode oder einer KM-(Kinetic-Metallization)-Methode; und
- einer Oberflächenschutzschicht (3), welche aus Wolframcarbid (WC), Eisen (Fe), Chrom (Cr) und Aluminium (Al) besteht, und welche durch Ablagern von Wolframcarbid (WC), Eisen (Fe), Chrom (Cr) und Aluminium (Al) in Partikelform mittels einer Sprüh-Ablagerungsmethode, vorzugsweise mittels einer HVOF-(High-Velocity-Oxygen-Fuel)-Methode oder einer HVAF-(High-Velocity-Air-Fuel)-Methode oder einer KM-(Kinetic-Metallization)-Methode, an der Basisschutzschicht (30) erhalten worden ist,
und dadurch, dass der Abschnitt der wenigstens einen Bremsfläche (2a oder 2b), welche durch die Basisschutzschicht (30) beschichtet ist, durch eine nitrocarburierte Schicht (300) des Basismetalls definiert ist und in Bezug auf das Zentrum des Bremsbands in einem radialen oder einem peripheren Querschnitt ein unebenes Profil aufweist.

## Revendications

1. Bande de freinage (2) d'un disque de frein à disque (1), ladite bande de freinage (2) étant définie par un corps de bande annulaire (6) agencé autour d'un axe de rotation de disque de frein ou axe de rotation (X-X) ; ledit corps de bande (6) étant composé d'une base métallique, de préférence de fonte grise ou d'acier ou d'aluminium ou de ses alliages ; ladite bande de freinage (2) comprenant au moins une surface de freinage (2a ou 2b) ; dans laquelle au moins une partie de ladite surface de freinage (2a ou 2b), au moins au nombre de une, comprend un revêtement de surface (10) approprié pour augmenter la performance tribologique et/ou la résistance à l'usure et/ou à la corrosion de ladite partie de la surface de freinage par rapport à ladite base métallique, ledit revêtement de surface (10) présentant une épaisseur moyenne (s),
dans laquelle ladite bande de freinage (2) comprend au moins un marquage (100) qui est réalisé sur ledit revêtement de surface (10) et constitué d'au moins un évidement (101) s'étendant depuis la surface dudit revêtement de surface sur une profondeur prédéterminée (h) ne dépassant pas l'épaisseur moyenne (s) dudit revêtement de surface (10), et à l'usage, la perte d'épaisseur du revêtement de surface (10) due à l'usure générant une réduction correspondante de la profondeur (h) dudit évidement (101), au moins au nombre de un, ledit marquage (100) agissant ainsi comme un indicateur de consommation dudit revêtement de surface (10),
dans laquelle ledit revêtement de surface (3) est constitué d'au moins une couche de matériau déposée au sommet de la base métallique dont est composé le corps de bande (6),
dans laquelle ledit revêtement de surface (3) est constitué de deux couches superposées ou plus, de préférence de différents matériaux,
dans laquelle ledit corps de bande (6) est constitué d'une base métallique choisie parmi la fonte grise ou l'acier,
dans laquelle ledit revêtement de surface (10) est constitué :
- d'une couche protectrice de base (30) qui est constituée de carbure de chrome (Cr3C2) et de nickel-chrome (NiCr), ou de nickel-chrome (NiCr), de fer (Fe), de molybdène (Mo), de cobalt (Co), de manganèse (Mn) et d'aluminium (Al), et est obtenue par dépôt en utilisant une technique de dépôt par pulvérisation, de préférence avec une technique HVOF (projection thermique à grande vitesse oxygène-carburant), ou une technique HVAF (projection thermique à grande vitesse air-carburant) ou une technique KM (métallisation cinétique) ; et
- un revêtement protecteur de surface (3) qui est constitué de carbure de tungstène (WC), de fer (Fe), de chrome (Cr) et d'aluminium (Al) et est obtenu par dépôt sur la couche protectrice de base (30) de carbure de tungstène (WC), de fer (Fe), de chrome (Cr) et d'aluminium (Al) sous forme particulaire avec une technique de dépôt par pulvérisation, de préférence avec une technique HVOF (projection thermique à grande vitesse oxygène-carburant) ou une technique HVAF (projection thermique à grande vitesse air-carburant) ou une technique KM (métallisation cinétique),
et dans laquelle la partie de ladite surface de freinage (2a ou 2b), au moins au nombre de une, revêtue de ladite couche protectrice de base (30) est définie par une couche nitrocarburée (300) de ladite base métallique et présente un profil rugueux en coupe transversale radiale ou circonférentielle par rapport au centre de la bande de freinage.

2. Bande selon la revendication 1, dans laquelle ledit évidement (101), au moins au nombre de un, est visible, de préférence à l'aeil nu.

3. Bande selon la revendication 1 ou 2, dans laquelle la profondeur prédéfinie (h) dudit évidement (101), au moins au nombre de un, est inférieure à l'épaisseur moyenne (s) de ladite couche protectrice de surface (10) d'une épaisseur de sécurité prédéfinie (Δs), de sorte qu'à l'usage, la profondeur (h) dudit évidement (101), au moins au nombre de un, est ramenée à zéro en raison de l'usure, une épaisseur résiduelle moyenne dudit revêtement de surface (10) égale à ladite épaisseur de sécurité prédéfinie (Δs) restant disponible.

4. Bande selon l'une quelconque des revendications précédentes, dans laquelle ledit évidement (101), au moins au nombre de un, présente une extension de surface telle qu'elle n'interfère pas avec le fonctionnement du frein à disque équipé d'un disque comprenant ladite bande de freinage.

5. Bande selon l'une quelconque des revendications précédentes, dans laquelle ledit évidement (101), au moins au nombre de un, s'étend sur la surface selon un motif prédéfini.

6. Bande selon la revendication 5, dans laquelle ledit motif prédéfini présente également une fonction esthétique ou d'identification, de préférence ledit motif prédéfini présentant la forme d'un logo ou d'une marque prédéfinie.

7. Bande selon l'une quelconque des revendications précédentes, dans laquelle au moins une partie dudit évidement (101), au moins au nombre de un, présente une section de surface - réalisée par rapport à un plan parallèle à la surface du revêtement de surface - qui diminue à mesure que la profondeur dudit évidement, au moins au nombre de un, augmente.

8. Bande selon l'une quelconque des revendications précédentes, dans laquelle ledit évidement, au moins au nombre de un, est obtenu par usinage par enlèvement de copeaux ou par gravure laser ou par gravure à jet d'eau ou par déformation plastique.

9. Bande selon l'une quelconque des revendications précédentes, dans laquelle la partie, au moins au nombre de une, de ladite surface de freinage (2a ou 2b) revêtue dudit revêtement de surface (10) présente un profil rugueux en coupe transversale radiale ou circonférentielle par rapport au centre de la bande de freinage.

10. Disque de frein à disque (1) comprenant une bande de freinage (2) telle que définie par l'une quelconque des revendications précédentes, et une cloche (5) associée à ladite bande de freinage (2) et appropriée pour un raccordement à un moyeu de roue de véhicule.

11. Procédé de fabrication d'une bande de freinage (2) comprenant les étapes fonctionnelles suivantes :
- la fourniture d'une bande de freinage (2) comprenant au moins une surface de freinage (2a ou 2b), la bande de freinage (2) étant définie par un corps de bande (6) composé d'une base métallique, de préférence de la fonte grise ou de l'acier ou de l'aluminium ou ses alliages ;
- la fabrication sur au moins une partie de ladite surface de freinage (2a ou 2b), au moins au nombre de une, d'un revêtement de surface (10) approprié pour augmenter la performance tribologique et/ou la résistance à l'usure et/ou à la corrosion de ladite partie de surface de freinage par rapport à ladite base métallique, ledit revêtement de surface (10) présentant une épaisseur moyenne (s),
dans lequel il comprend une étape fonctionnelle consistant à fabriquer sur ledit revêtement de surface (10) au moins un marquage (100) constitué d'au moins un évidement (101) s'étendant depuis la surface dudit revêtement de surface sur une profondeur prédéfinie (h) ne dépassant pas l'épaisseur moyenne (s) dudit revêtement de surface (10), à l'usage, la perte d'épaisseur du revêtement de surface (10) due à l'usure générant une réduction correspondante de la profondeur (h) dudit évidement (101), au moins au nombre de un, ledit marquage (100) agissant ainsi comme un indicateur de consommation dudit revêtement de surface (10),
dans lequel ledit revêtement de surface (3) est constitué d'au moins une couche de matériau déposée au sommet de la base métallique dont est composé le corps de bande (6),
dans lequel ledit revêtement de surface (3) est constitué de deux couches superposées ou plus, de préférence de différents matériaux,
dans lequel ledit corps de bande (6) est constitué d'une base métallique choisie parmi la fonte grise ou l'acier,
**caractérisé en ce que** ledit revêtement de surface (10) est constitué de :
- une couche protectrice de base (30) qui est constituée de carbure de chrome (Cr3C2) et de nickel-chrome (NiCr), ou de nickel-chrome (NiCr), de fer (Fe), de molybdène (Mo), de cobalt (Co), de manganèse (Mn) et d'aluminium (Al), et est obtenue par dépôt en utilisant une technique de dépôt par pulvérisation, de préférence avec une technique HVOF (projection thermique à grande vitesse oxygène-carburant), ou une technique HVAF (projection thermique à grande vitesse air-carburant) ou une technique KM (métallisation cinétique) ; et
- un revêtement protecteur de surface (3) qui est constitué de carbure de tungstène (WC), de fer (Fe), de chrome (Cr) et d'aluminium (Al) et est obtenu par dépôt sur la couche protectrice de base (30) de carbure de tungstène (WC), de fer (Fe), de chrome (CR) et d'aluminium (Al) sous forme particulaire en utilisant une technique de dépôt par pulvérisation, de préférence avec une technique HVOF (projection thermique à grande vitesse oxygène-carburant) ou une technique HVAF (projection thermique à grande vitesse air-carburant) ou une technique KM (métallisation cinétique),
et **en ce que** la partie de ladite surface de freinage (2a ou 2b), au moins au nombre de une, revêtue de ladite couche protectrice de base (30) est définie par une couche nitrocarburée (300) de ladite base métallique et présente un profil rugueux en coupe transversale radiale ou circonférentielle par rapport au centre de la bande de freinage.
